# EUROPEAN PATENT SPECIFICATION

(11) **EP 0 588 532 B1**
(45) Date of publication and mention of the grant of the patent: **15.04.1998**
(21) Application number: 93306942.9
(22) Date of filing: 02.09.1993
(51) Int. Cl.: B21F 45/00, B23K 11/14

(54) **Fixing of carrying handles to containers**
Befestigen von Tragbügeln an Behältern
Fixation des poignées sur des conteneurs

(30) Priority: 03.09.1992 GB 9218615
(43) Date of publication of application: 23.03.1994
(73) Proprietor: IMPRESS METAL PACKAGING LIMITED, Norwich, Norfolk NR7 9AT (GB)
(72) Inventor: Clarke, Alan Roy, Norwich, Norfolk NR6 7HQ (GB)
(74) Representative: W.P. THOMPSON & CO.

(56) References cited:
- EP-A- 502 688
- GB-A- 1 038 030
- GB-A- 1 044 442
- GB-A- 2 228 465

## Description

This invention relates to the fixing of carrying handles to containers, and is particularly concerned with the fixing of carrying handles to paint cans.

GB-A-1044442 describes a method of securing metal trunnion pieces to a container body. Trunnion pieces are secured to the container by welding and a wire handle is looped around them.

Our European Patent Application EP-A-0502688, published after the priority date of the present application, describes a cleat which is used for retaining the respective opposite ends of a carrying handle on a container, such as a paint can. The cleat described in that application is adapted to be secured to a metal container by projection welding, the cleat being characterised by having an annular flanged head portion and a shank portion defining a plurality of sharp points. Because the cleat will normally be welded to a can which has already been painted or lacquered externally, it is necessary for the projection welding process that the cleat has a plurality of sharp projecting points which can penetrate the external paint layer and weld satisfactorily with the metal of the can, such as tin-plate.

Many containers, such as paint cans, have cleats, for example in the form of studs, riveted through the wall of the container. With these riveted fixings, and also with the cleats of the type described in EP-A-0502688, it is the practice to use a carrying handle of flexible plastics material which is provided with a "keyhole" slot at each end. The ends of the handle can thus be fitted over the studs and drawn into place to make the fastening. However, the cost of such carrying handles having keyhole slots is considerable and a two-stage process is involved, namely fitting the handle ends over the cleats or rivets and then drawing the handle up to locate the cleats or rivets in the narrower part of the keyhole slots.

It has now been appreciated that by appropriate use of the cleat which is described in the aforesaid patent application one can use a carrying handle of much simpler construction, and in particular a carrying handle which simply has a circular hole punched or otherwise formed through the thickness of the handle material.

With the present invention it is possible to affix the cleats and handle to a container, such as a paint can, in one operation, instead of having to use a double operation as is the case with the use of carrying handles having keyhole slots.

In accordance with the present invention there is provided a method of fixing a carrying handle to the wall of a metal container,such as a paint can, as claimed in claim 1.

Preferably, the cleats and the perforated end portions of the handle are first brought together and then the cleats and handle end portions are brought substantially simultaneously into contact with the container wall, whereupon the projection welding operation is carried out.

Preferably, the carrying handle is an elongate flat strip of material having a circular hole at a predetermined distance from each end to receive a shank portion of the respective cleats.

With the method of the present invention the fastening of the cleats and handle to the container is effective in a single operation, with the added advantage that one can use a simpler design of carrying handle than the conventional slotted handle. This results in substantial cost saving.

The present invention also relates to the finished product, namely a metal container, such as a paint can, having a carrying handle fixed thereto substantially simultaneously with the fixing thereto of a pair of oppositely disposed cleats secured by projection welding to the outside of the container wall.

The fixing is preferably such that there is subsequently no permitted motion between the cleats and the handle apart from that which permits rotation of the handle relative to the cleats.

The invention will be more fully understood from the following description which is given by way of example and with reference to the accompanying drawing.
In the drawing:
Fig. 1 is a partial view of a paint can fitted with a carrying handle in accordance with the invention;
Fig. 2 is a top plan view of a preferred embodiment of cleat used for fixing the handle;
Fig. 3 is a side view of the cleat shown in Fig. 2; and,
Fig. 4 is a schematic illustration of the welding operation.

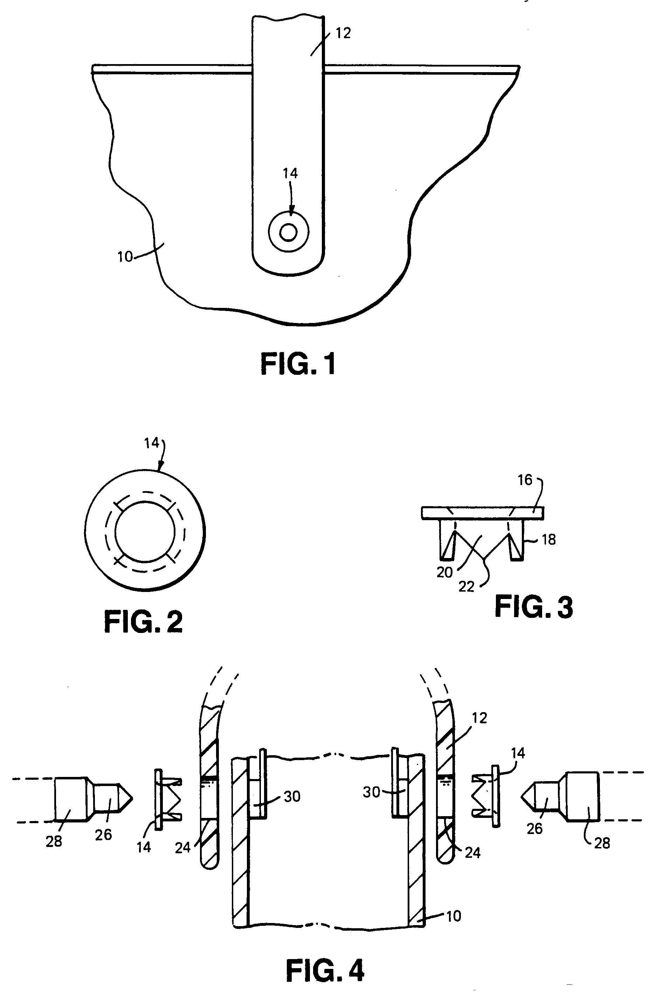

As shown in Fig. 1 of the drawing, a paint can, a part of the wall of which is indicated at 10, has affixed thereto a carrying handle 12 which may be an elongate flat strip of plastics material provided adjacent to each end with a circular hole. Preferably, the handle is made of extruded polypropylene which is unwound from a coil and which is fed into a press tool which produces the holes at accurate predetermined distances from each end of the handle. Through each hole extends a metal cleat 14 which is preferably of the type described in our European patent application EP-A-0502688. This cleat, which is shown in Figs. 2 and 3, can be made for example from mild steel or stainless steel. The feature of using a press tool to produce the holes in the handle at accurate positions from the handle ends means that the handle can be located in a position to accept the cleats reliably without the handle having to be made to an accurate length. The cleat has a head portion 16 in the form of an annular flange, and a tubular shank portion 18. As shown most clearly in Fig. 3, the tubular shank portion 18 has a configuration such that it defines four equispaced legs 20 with sharp points 22 at the apices of the four generally triangular legs of the shank. Preferably, four such sharp points 22 are provided. In the projection welding process by means of which the cleat is secured to the can, these sharp points will penetrate through the paint or lacquer on the can to the metal of the can to ensure a satisfactory weld.

As described in detail in the aforesaid European patent application EP-A-0502688, the cleat 14 is manufactured in a multi-stage process which involves the points 22 being made by the intersection of two shear cuts at right-angles, followed by a punching operation which creates the generally triangular pointed legs of the shank.

In carrying out the method of the present invention, as illustrated in Fig. 4, the handle 12 which has come from the press tool (not shown) is presented to the can in a bent attitude with the holes 24 in alignment with the positions on the can wall at which the cleats are to be welded. A pair of cleats 14, one on each side of the can, are fed from a supply (not shown) to positions outside and in alignment with the handle holes 24. The welding guns (not shown) which are provided on each side of the can are each provided with a spring-loaded pilot 26 which projects beyond the electrode 28. The pilots 26, as part of the timed movement of the welding guns, pick up the cleats 14 and serve to locate the cleats in alignment with the holes 24 in the handle and in alignment with the electrodes, and to maintain that alignment, while the welding guns move in to effect the welding process. In practice, the pilots 26 pick up the cleats and move radially inwards until the cleats are within the holes 24 in the handle, with the handle ends at this stage being some 6mm from the can wall. A further inward movement of the welding guns brings the points of the cleats into contact with the can wall and the inside face of the handle also into contact with the can wall, whereupon the projection welding takes place. During this procedure a pair of supports 30 inside the can are positioned behind the weld zones. By this process the carrying handle 12 is secured in place, with its only freedom for movement thereafter being in a rotational sense about the axis of the cleats 14.

## Claims

1. A method of fixing a carrying handle (12) to the wall of a metal container (10) which comprises securing fasteners to diametrically opposed sides of the container by welding,
characterised in that perforated end portions of the handle (12) are positioned between the container wall and respective cleats (14) with the handle holes (24) in alignment with the positions on the container wall at which the cleats (14) are to be welded, and the cleats (14) are fed through the handle holes (24) and are welded to the container wall.

2. A method as claimed in claim 1, characterised in that the cleats (14) and perforated end portions of the handle (12) are first brought together and then the cleats and handle end portions are brought substantially simultaneously into contact with the container wall, whereupon the welding is carried out.

3. A method as claimed in claim 1 or 2, characterised in that the cleats (14) are supported by spring-loaded pilots (26) to maintain alignment of the cleats, the handle and welding electrodes (28).

4. A method as claimed in claim 1, 2 or 3, characterised in that the handle (12) is an elongate flat strip of material having a circular hole at a predetermined distance from each end to receive a shank portion (18) of the respective cleats.

5. A method as claimed in any preceding claim, characterised in that the handle with its perforated end portions is pressed from extruded polypropylene.

## Patentansprüche

1. Verfahren zur Befestigung eines Tragegriffs (12) an der Wandung eines metallenen Behälters (10), welches die Befestigung von Befestigungsmitteln an sich diametral gegenüberliegenden Seiten des Behälters durch Schweißen umfaßt, **dadurch gekennzeichnet,** daß perforierte Endabschnitte des Griffes (12) zwischen der Behälterwandung und jeweiligen Blechklammern (14) so positioniert werden, daß die Grifflöcher (24) mit den Stellen der Behälterwandung fluchten, an denen die Blechklammern (14) angeschweißt werden, und daß die Blechklammern (14) durch die Grifflöcher (24) geführt und an die Behälterwandung angeschweißt werden.

2. Verfahren nach Anspruch 1, **dadurch gekennzeichnet,** daß die Blechklammern (14) und perforierte Endabschnitte des Griffes (12) zuerst zusammengebracht werden und daraufhin die Blechklammern und die Griffendabschnitte im wesentlichen gleichzeitig in Kontakt mit der Behälterwandung gebracht werden, woraufhin das Schweißen durchgeführt wird.

3. Verfahren nach Anspruch 1 oder 2, **dadurch gekennzeichnet,** daß die Blechklammern (14) durch federbelastete Führungsstifte (26) unterstützt sind, so daß die Ausrichtung der Blechklammern, des Griffes und der Schweißelektroden (18) erhalten ist.

4. Verfahren nach Anspruch 1, 2 oder 3, **dadurch gekennzeichnet,** daß der Griff (12) ein langgestreckter, flacher Materialstreifen ist mit einem Rundloch in einem vorbestimmten Abstand von jedem Ende, wobei das Rundloch einen Schaftabschnitt (18) der jeweiligen Blechklammern aufnimmt.

5. Verfahren nach einem der vorhergehenden Ansprüche, **dadurch gekennzeichnet,** daß der Griff mit seinen perforierten Endabschnitten aus extrudiertem Polypropylen gepreßt ist.

## Revendications

1. Procédé de fixation d'une poignée de transport (12) à la paroi d'un récipient en métal (10), qui comprend la fixation d'attaches à des côtés diamétralement opposés du récipient par soudage, caractérisé en ce qu'on place les parties d'extrémité perforées de la poignée (12) entre la paroi du récipient et des boutons respectifs (14), les trous (24) de la poignée étant en alignement avec les positions sur la paroi du récipient auxquelles les boutons (14) doivent être soudés, on introduit les boutons (14) à travers les trous (24) de la poignée et on les soude à la paroi du récipient.

2. Procédé suivant la revendication 1, caractérisé en ce qu'on amène d'abord en prise mutuelle les boutons (14) et les parties d'extrémité perforées de la poignée (12), et on amène ensuite les boutons et les parties d'extrémité de la poignée sensiblement simultanément en contact avec la paroi du récipient, après quoi on effectue le soudage.

3. Procédé suivant la revendication 1 ou 2, caractérisé en ce que les boutons (14) sont supportés par des éléments pilotes chargés élastiquement (26), pour maintenir l'alignement des boutons, de la poignée et des électrodes de soudage (28).

4. Procédé suivant la revendication 1, 2 ou 3, caractérisé en ce que la poignée (12) est une bande plate allongée de matière comportant un trou circulaire à une distance prédéterminée de chaque extrémité, pour recevoir une queue (18) des boutons respectifs.

5. Procédé suivant une quelconque des revendications précédentes, caractérisé en ce que la poignée comportant ses parties d'extrémité perforées est pressée à partir de polypropylène extrudé.
